# FASCICULE DE BREVET EUROPEEN

(11) **EP 3 074 264 B1**
(45) Date de publication et mention de la délivrance du brevet: **24.06.2020**
(21) Numéro de dépôt: 14808888.3
(22) Date de dépôt: 27.11.2014
(51) Int. Cl.: B60K 28/16, B60W 30/18

(54) **SYSTEME DE CONTROLE DE MOTRICITE POUR VEHICULE AUTOMOBILE ET PROCEDE DE CONTROLE CORRESPONDANT**
FAHRBARKEITSSTEUERUNGSSYSTEM FÜR EIN KRAFTFAHRZEUG UND ZUGEHÖRIGES STEUERUNGSVERFAHREN
DRIVEABILITY CONTROL SYSTEM FOR A MOTOR VEHICLE AND CORRESPONDING CONTROL METHOD

(30) Priorité: 28.11.2013 FR 1361766
(43) Date de publication de la demande: 05.10.2016
(73) Titulaire: Renault S.A.S., 92100 Boulogne-Billancourt (FR)
(72) Inventeur: GONCALVES, Gil, F-27600 Gaillon (FR); PHILIPPE, Thierry, F-27950 Saint Marcel (FR)
(86) Numéro de dépôt international: PCT/EP2014/075837
(87) Numéro de publication internationale: WO 2015/078978

(56) Documents cités:
- FR-A1- 2 645 084
- US-A- 5 018 595
- US-A- 5 754 967

## Description

L'invention concerne de manière générale le contrôle du comportement d'un véhicule automobile et se rapporte plus particulièrement au contrôle de la motricité d'un véhicule automobile.

Le contrôle de la motricité d'un véhicule automobile est essentiel pour préserver la stabilité du véhicule et améliorer la sécurité.

L'efficacité d'un système de contrôle de motricité pour véhicule automobile implique de limiter les emballements d'au moins l'une des roues du véhicule pour préserver sa stabilité et de réduire et limiter les à-coups qui peuvent être perçus par le conducteur pour conserver un confort de conduite du véhicule et améliorer la sécurité.

Les systèmes de contrôle de motricité conventionnels mettent en œuvre une mesure du glissement d'au moins l'une des roues du véhicule par rapport au sol, des calculs aptes à émettre un signal de correction d'un couple à transmettre sur au moins l'une des roues du véhicule et des moyens pour corriger le couple à transmettre sur ladite roue en fonction dudit signal de correction.

Un système de contrôle de motricité est connu de FR 2645084.

On pourra à cet égard se référer aussi au document US 5,443,307 qui décrit un système de contrôle du glissement des roues motrices d'un véhicule automobile dans lequel le différentiel peut être bloqué par une action sur les freins. Par calcul de la différence entre la vitesse de rotation des roues motrices et de la vitesse de rotation du moteur, un correcteur de type proportionnel intégral dérivé (PID) combiné à un asservissement génère un signal de correction pour appliquer un moment de freinage sur l'une des roues motrices.

Ces systèmes présentent l'inconvénient de parfois corriger de façon brutale une erreur de glissement alors que ce n'est pas nécessaire. Ces corrections occasionnent une détérioration du confort de conduite et de la sécurité.

Une solution connue de l'état de la technique consiste à générer un signal de correction en rampe, dont le but est de transmettre progressivement à la roue le couple corrigé.

L'élaboration d'un signal de correction de couple ayant une forme de rampe est avantageuse dans la mesure où elle évite les à-coups et diminue la vitesse de réemballement de la roue. Il a toutefois été constaté que l'utilisation d'un signal de correction en rampe induit un retard et/ou un manque de réactivité dans le contrôle de motricité.

Au vu de ce qui précède, le but de l'invention est d'améliorer encore la réponse du système de contrôle de motricité en prenant en compte l'adhérence de la roue par rapport au sol.

L'invention a donc pour objet, selon un premier aspect, un système de contrôle de motricité pour véhicule automobile comprenant :
- des moyens pour déterminer le glissement d'au moins l'une des roues du véhicule par rapport au sol,
- des moyens de calcul aptes à émettre un signal en rampe de correction d'un couple à transmettre sur au moins l'une des roues du véhicules et,
- des moyens pour corriger le couple à transmettre sur ladite roue en fonction dudit signal de correction.

Selon une caractéristique générale de ce système de contrôle, les moyens pour déterminer le glissement comprennent un moyen de mesure pour mesurer le couple de référence transmis à la roue avant glissement de celle-ci, les moyens de calcul comprenant un moyen pour mémoriser le couple de référence et pour calculer le signal de correction à partir du couple de référence mémorisé.

Ainsi, en calculant le signal de correction du couple à transmettre à la roue du véhicule à partir du couple de référence transmis à la roue avant glissement, il est possible d'adapter la rampe et, plus particulièrement, la pente de la rampe du signal de correction du couple en fonction de l'adhérence de la roue par rapport au sol.

Par exemple, le couple de référence est mesuré avant apparition ou augmentation du glissement.

Dans l'invention, les moyens de calcul comprennent un module apte à calculer un signal d'activation d'optimisation en fonction du couple de référence et une cartographie délivrant une valeur de pente de rampe de correction du couple de freinage en fonction du glissement.

Par exemple, le signal d'activation d'optimisation est calculé en fonction d'une marge de couple prédéterminée.

L'invention a également pour objet, selon un autre aspect, un procédé de contrôle de motricité pour véhicule automobile, dans lequel on mesure le glissement d'au moins l'une des roues du véhicule, on émet un signal en rampe de correction d'un couple à transmettre sur au moins l'une des roues du véhicule et l'on corrige le couple à transmettre sur ladite roue en fonction dudit signal de correction.

On mesure en outre le couple de référence transmis à la roue avant glissement de celle-ci, on mémorise le couple de référence et on calcule le signal de correction à partir du couple de référence mémorisé.

Dans l'invention, on extrait d'une cartographie une valeur de pente du signal de correction du couple de freinage en fonction du glissement sous le contrôle du signal d'activation d'optimisation calculé en fonction du couple de référence.

On peut prévoir que le signal d'optimisation est calculé sous le contrôle d'un signal d'activation du contrôle de motricité.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est un schéma d'ensemble d'un dispositif de contrôle de motricité selon un mode de réalisation de l'invention, appliqué à une roue directrice,
- la figure 2 illustre les moyens de calcul de l'erreur de glissement dans le dispositif de la figure 1,
- la figure 3 illustre le calcul du couple de référence dans le dispositif de la figure 1,
- la figure 4 illustre l'élaboration du signal d'activation d'optimisation dans le dispositif de la figure 1,
- la figure 5 illustre le calcul du signal de correction du couple transmis à la roue dans le dispositif de la figure 1, et
- la figure 6 représente un exemple de procédé de contrôle de motricité au moyen du dispositif de contrôle de la figure 1.

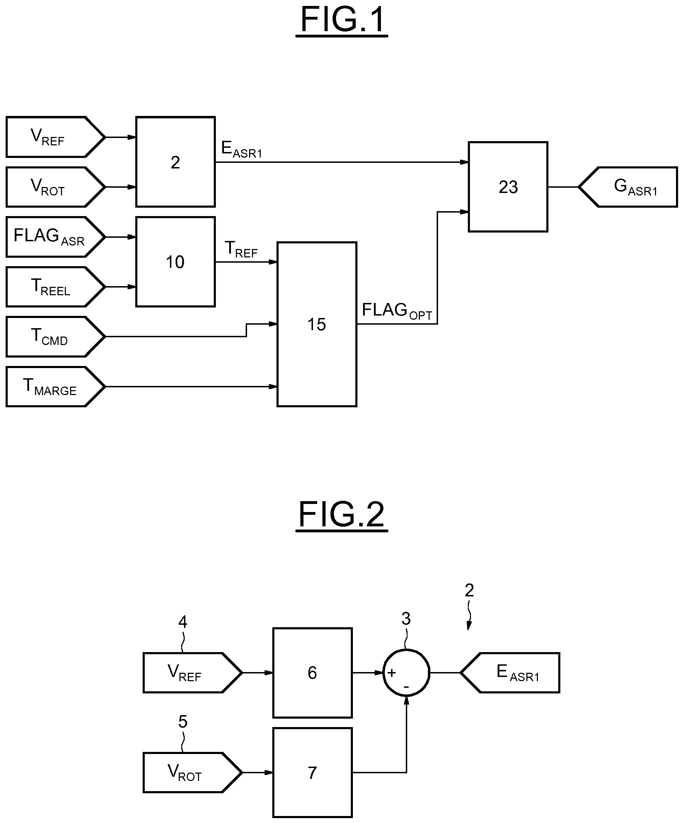

La figure 1 représente un exemple de dispositif de contrôle de motricité selon un mode de réalisation de l'invention.

Plus précisément, dans le mode de réalisation envisagé, le dispositif de contrôle illustré à la figure 1 fait partie d'un dispositif d'anti-patinage, que l'homme du métier désigne par le terme d'ASR.

Ce dispositif a pour but de corriger le couple commandé par le conducteur pour permettre au véhicule d'avoir une meilleure tenue de route. Il émet à cet égard un signal de correction, utilisé par des moyens mécaniques, non représentés, pour corriger le couple transmis. Dans cet exemple, le signal de correction est utilisé pour corriger le couple transmis à une roue motrice du véhicule, à partir de données concernant le glissement de cette roue.

Comme la plupart des dispositifs de contrôle de motricité, les paramètres d'entrée comprennent la vitesse de rotation des roues V_{ROT}, la vitesse de référence du véhicule par rapport au sol V_{REF}, un signal d'activation du contrôle de motricité FLAG_{ASR} et un couple T_{CMD} commandé par le conducteur. L'unique paramètre de sortie est un signal de correction G_{ASR1} du couple à transmettre à la roue. Comme on le voit sur la figure 1, le dispositif dépend de deux paramètres d'entrée supplémentaires qui sont le couple réel transmis à la roue T_{REEL} et un couple de marge T_{MARGE}.

Le fonctionnement de cet exemple de contrôle de motricité se fait en quatre temps :
- détermination de l'erreur de glissement de la roue,
- obtention du couple de référence,
- détermination du signal d'activation d'optimisation, et
- calcul du signal corrigé.

Le dispositif de contrôle comporte ainsi un premier module 2 de calcul destiné à calculer l'erreur de glissement E_{ASR1} de la roue, qui est la première variable intermédiaire nécessaire pour l'élaboration du signal de correction. L'erreur E_{ASR1} est calculée à partir de la vitesse de rotation V_{ROT} de la roue et de la vitesse de référence V_{REF} du véhicule. Le module de calcul 2 sera détaillé en référence à la figure 2.

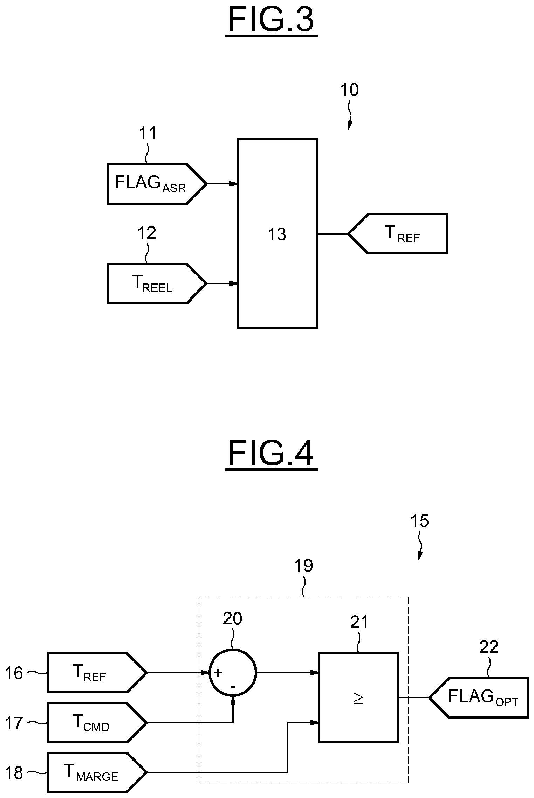

Le dispositif comporte également un deuxième module de calcul destiné au calcul du couple de référence T_{REF} qui est une autre donnée intermédiaire nécessaire à l'obtention du signal de correction. Il dépend du signal d'activation du dispositif de contrôle de motricité FLAG_{ASR} et du couple réel transmis à la roue T_{REEL}. Le deuxième module de calcul 10 sera détaillé en référence à la figure 3.

Un troisième module de calcul 15 délivre le signal d'activation d'optimisation FLAG_{OPT} qui est nécessaire également pour obtenir le signal de correction. Celui-ci dépend du couple de commande T_{CMD}, qui correspond au couple commandé par le conducteur et d'un couple de marge T_{MARGE} prédéterminé. Il dépend également du couple de référence T_{REF} obtenu en sortie du module 10. Le troisième module de calcul 15 sera détaillé en référence à la figure 4.

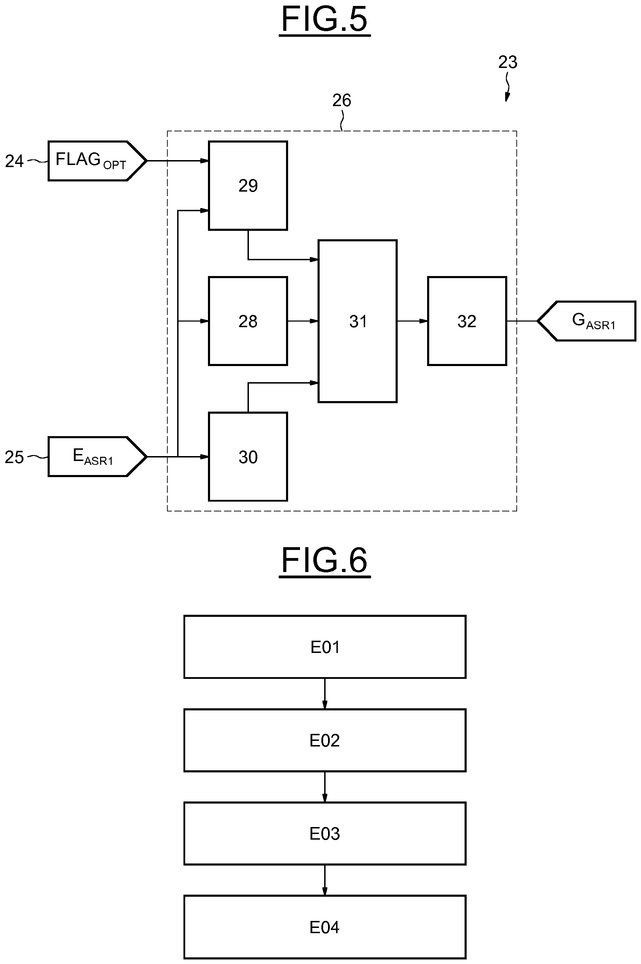

Le signal de correction du couple transmis à la roue G_{ASR1} est finalement obtenu à partir de l'erreur de glissement de la roue E_{ASR1}, issue du module 2, et du signal d'activation d'optimisation FLAG_{OPT}, issu du module 19. Ces données d'entrée sont fournies en entrée d'un quatrième module de calcul 23 qui sera détaillé en référence à la figure 5.

On se référera tout d'abord à la figure 2 qui représente le premier module 2 pour calculer l'erreur de glissement E_{ASR1} de la roue. Ce premier module de calcul 2 comprend un comparateur 3, deux blocs d'entrée 4 et 5, reliés au comparateur 3 via des blocs respectifs 6 et 7. Le premier bloc d'entrée 4 est relié à un moyen de mesure de la vitesse de référence V_{REF} du véhicule par rapport au sol. Le bloc 6 permet de manipuler la vitesse de référence selon une fonction de transfert, par exemple une fonction constante, affine, polynôme... selon le niveau de prestation désiré.

Le second bloc d'entrée 5 est relié à un moyen de mesure de la vitesse V_{ROT} de rotation de la roue. Le bloc 7 met en œuvre une fonction de transfert qui permet d'obtenir, à partir de la vitesse de rotation V_{ROT} de la roue, la vitesse tangentielle V_{T} de la roue par rapport au sol, calculée au point de calcul de la vitesse de référence V_{REF}.

Le comparateur 3 permet de soustraire le signal de vitesse tangentielle V_{T} au signal de vitesse de référence V_{REF}, éventuellement manipulé de manière à obtenir le signal d'erreur de glissement E_{ASR1} de la roue. L'erreur de glissement E_{ASR1} est une première donnée nécessaire pour permettre la correction du glissement de la roue, qui est l'une des fonctions du dispositif de contrôle de motricité.

En référence à la figure 3, le deuxième module de calcul 10 destiné au calcul du couple de référence T_{REF} comprend deux blocs d'entrée 11 et 12 directement reliés à un bloc de transfert 13. Le premier bloc d'entrée 11 reçoit le signal FLAG_{ASR} d'activation du contrôle de motricité sur la roue. Le changement d'état du signal FLAG_{ASR} correspond au début ou à la fin du patinage de la roue. Le second bloc d'entrée 12 est relié à un moyen de mesure du couple réel

T_{REEL} transmis à la roue. Lors du changement d'état en mode actif du signal d'activation FLAG_{ASR}, la roue commence à patiner. A cet instant, le couple de référence T_{REF} est défini comme étant égal au couple réel T_{REEL}. Le reste du temps, le couple de référence est gardé en mémoire, grâce à un moyen non représenté appartenant aux moyens de calcul. Le couple de référence T_{REF} est donc le signal de sortie du module de calcul 10.

Comme visible sur la figure 4, le troisième module de calcul 15 destiné au calcul du signal d'activation d'optimisation FLAG_{OPT} comprend trois blocs d'entrée 16, 17 et 18 et un bloc de sortie 22. Le premier bloc d'entrée 16 modélise le couple de référence T_{REF} obtenu en sortie du deuxième module 10. Le deuxième bloc d'entrée 17 correspond au couple de commande T_{CMD}, qui est le couple moteur ou le couple de freinage destiné à être transmis à la roue, commandé par le conducteur. Le troisième bloc 18 représente le couple de marge T_{MARGE} qui correspond à un paramètre prédéterminé selon le niveau de prestation désiré.

Les trois blocs d'entrée 16, 17 et 18 sont reliés à un bloc de transfert 19, dont la sortie est un signal d'activation d'optimisation FLAG_{OPT}. Le signal FLAG_{OPT} détermine le mode de calcul du signal de correction du couple à transmettre.

Dans le cas d'un signal d'activation d'optimisation actif, le signal de correction sera dit optimisé, c'est-à-dire qu'il commandera une variation du couple plus rapide, mais susceptible de générer d'importants à-coups. Dans le cas contraire, le signal délivrera un signal dit non optimisé, commandant une réponse de variation de couple plus lente afin d'éviter les à-coups.

Le bloc 19 comprend un comparateur 20 placé de manière à calculer le couple de référence moins le couple de commande (T_{REF}-T_{CMD}). Un composant tout ou rien 21 compare alors la valeur obtenue en sortie du comparateur 20 avec la valeur du couple de marge T_{MARGE}. Lorsque le couple en sortie du comparateur 20 est supérieur au couple de marge, le composant 21 délivre le signal « 0 ». Dans le cas contraire, il délivre le signal « 1 ».

En conclusion, le bloc 19, recevant le couple de référence T_{REF}, le couple de commande T_{CMD} et le couple de marge T_{MARGE}, délivre un signal d'activation d'optimisation FLAG_{OPT}, selon par la fonction de transfert suivante :
- si T_{REF}-T_{CMD}>=T_{MARGE}, alors FLAG_{OFT}=0,
- si T_{REF}-T_{CMD}<T_{MARGE}, alors FLAG_{OPT}=1.

En se référant enfin à la figure 5, le quatrième module de calcul 23 qui délivre le signal de correction du couple transmis à la roue G_{ASR1} comprend deux bornes d'entrée 24 et 25. L'une contient le signal d'erreur de glissement E_{ASR1}, délivré en sortie du premier module de calcul 2. L'autre contient le signal d'activation d'optimisation FLAG_{OPT}, délivré en sortie du troisième module de calcul 15. Les deux blocs d'entrée sont liés à un bloc de transfert 26 dont la sortie est le signal de correction du couple transmis à la roue, G_{ASR1}. Ce signal de correction est destiné à commander les moyens pour corriger le couple à transmettre sur la roue, non représentés. De cette manière, la variation de couple transmis à la roue est adaptée à l'adhérence de celle-ci par rapport au sol, et les à-coups peuvent être évités tout en maintenant un système rapide.

Le bloc de transfert 26 comprend un premier contrôleur 28 de correction de l'erreur de glissement. Ce contrôleur peut par exemple être un correcteur PID, ou un autre type de contrôleur, ou une cartographie... Le bloc de transfert 26 comprend un second contrôleur 29. Dans cet exemple, il s'agit d'une cartographie dans laquelle sont stockés des signaux de réponse en fonction de l'erreur de glissement et du signal d'activation d'optimisation FLAG_{OPT}. Dans cet exemple, un troisième contrôleur 30 délivre un signal de réponse à l'erreur de glissement E_{ASR1}. Un limiteur de rampe 31 est placé en aval des contrôleurs 28, 29 et 30. Celui-ci combine les trois signaux de manière à émettre un signal de sortie en rampe, dont la pente dépendra de l'erreur de glissement E_{ASR1} et du signal d'activation d'optimisation FLAG_{OPT}. Pour deux situations avec des erreurs de glissement identiques et des signaux d'activation d'optimisation différents, une valeur nulle du signal d'activation d'optimisation FLAG_{OPT} provoquera une émission d'un signal en rampe de pente inférieure à celle avec un signal d'activation d'optimisation FLAG_{OPT} égal à 1. Dans cet exemple, on dispose enfin un composant 32 visant à borner la réponse.

Le signal de correction dépend donc de deux paramètres. Il dépend en premier lieu de l'erreur de glissement E_{ASR1}. Le signal de correction est en second lieu dépendant du signal d'activation d'optimisation FLAG_{OPT}, qui est actif dès lors qu'il y a glissement plus une marge.

Ainsi, au moyen de ce bloc de transfert 26, à erreurs de glissement E_{ASR1} égales, le signal de réponse permet une faible variation de couple lorsque le signal d'activation d'optimisation FLAG_{OPT} est inactif et une forte variation de couple lorsque le signal d'activation d'optimisation FLAG_{OPT} est actif.

A l'aide d'un dispositif de ce type, il est possible d'adapter la réponse en rampe à différents paramètres tels que l'adhérence, en vue de préserver la réactivité et le confort de conduite. Par exemple, en situation de forte adhérence, les à-coups sont plus fortement perceptibles par le conducteur et on attache moins d'importance à la réactivité du système de contrôle de motricité que dans une situation de faible adhérence.

Dans cette situation de forte adhérence, le signal d'activation d'optimisation FLAG_{OPT} est inactif, et la variation de couple est faible. En situation de faible adhérence, les à-coups sont filtrés et le système de contrôle de motricité nécessite une réactivité plus importante. Le signal d'activation d'optimisation FLAG_{OPT} est donc actif, et la variation de couple sera plus forte. La variation de couple est donc adaptée à l'adhérence de la roue.

La figure 6 présente un exemple de procédé de contrôle de motricité mettant en œuvre le dispositif qui vient d'être décrit.

Dans une première phase E01, on détermine les données d'entrée qui vont être traitées au cours des étapes suivantes. Cette première phase comporte les étapes consistant notamment à:
- déterminer le glissement d'une des roues du véhicule par rapport au sol, à partir de la mesure de la vitesse de référence V_{REF} du véhicule par rapport au sol et de la mesure de la vitesse de rotation V_{ROT} de ladite roue,
- contrôler le signal d'activation FLAG_{ASR} du contrôle de motricité,
- contrôler le couple transmis à la roue T_{REEL}, et
- contrôler le couple de commande T_{CMD}.

Dans une seconde phase E02, on effectue les calculs des données intermédiaires qui vont être traitées par la suite. Dans cet exemple, on détermine donc :
- le couple de référence T_{REF}, qui est défini comme égal au couple transmis à la roue T_{REEL} au moment d'un changement d'état à l'état actif du signal d'activation du contrôle de motricité, et
- le signal d'activation de l'optimisation FLAG_{OPT}, défini à partir d'un couple de marge prédéterminé T_{MARGE}, du couple de référence T_{REF} et du couple de commande T_{CMD}.

Dans une troisième phase E03, on élabore à partir des données d'entrée et intermédiaires le signal de sortie. Celui-ci est un signal en rampe dont la pente est extraite d'une cartographie en fonction du glissement et sous le contrôle du signal d'activation d'optimisation FLAG_{OPT}. On pourra par exemple envisager de calculer une erreur de glissement que l'on souhaiterait asservir, au moyen d'un signal de sortie en rampe dont la pente dépend également du signal d'activation d'optimisation FLAG_{OPT}. Le signal de sortie émis est destiné à être un signal de correction du couple transmis à la roue.

Dans une quatrième phase E04, on corrige le couple à transmettre à la roue à partir du signal de correction mentionné précédemment. Des moyens de correction, par exemple une pression de freinage appliquée sur la roue, permettent de mettre en œuvre la correction élaborée au cours du processus.

Ainsi, grâce au processus qui vient d'être décrit, il est possible de corriger le couple commandé par le conducteur en fonction du glissement et de paramètres supplémentaires tels qu'un couple de référence pouvant désigner un couple maximal transmissible avant perte d'adhérence. De cette façon, le couple transmis à la roue offre une meilleure tenue de route et une réactivité supérieure aux procédés connus de l'état de la technique.

## Revendications

1. Système de contrôle de motricité pour véhicule automobile, comprenant :
- des moyens pour déterminer le glissement d'au moins l'une des roues du véhicule par rapport au sol,
- des moyens de calcul (26) aptes à émettre un signal en rampe de correction d'un couple à transmettre sur au moins l'une des roues du véhicule, et
- des moyens pour corriger le couple à transmettre sur ladite roue en fonction dudit signal de correction,
**caractérisé en ce que** les moyens pour déterminer le glissement comprennent un moyen de mesure pour mesurer le couple de référence transmis à la roue avant glissement de celle-ci, **en ce que** les moyens de calcul comprennent un moyen pour mémoriser le couple de référence et pour calculer le signal de correction à partir du couple de référence mémorisé, et **en ce que** les moyens de calcul comprennent un module (15) apte à calculer un signal d'activation d'optimisation en fonction du couple de référence et une cartographie (29) délivrant une valeur de pente de rampe de correction du couple de freinage en fonction du glissement.

2. Système de contrôle de motricité selon la revendication 1, **caractérisé en ce que** le couple de référence est mesuré avant apparition ou augmentation du glissement.

3. Système de contrôle de motricité selon la revendication 1 ou 2, **caractérisé en ce que** le signal d'activation d'optimisation est calculé en fonction d'une marge de couple prédéterminée.

4. Procédé de contrôle de motricité pour véhicule automobile, dans lequel on mesure le glissement d'au moins l'une des roues du véhicule, on émet un signal en rampe de correction d'un couple à transmettre sur au moins l'une des roues du véhicule et l'on corrige le couple à transmettre sur ladite roue en fonction dudit signal de correction, **caractérisé en ce que** l'on mesure le couple de référence transmis à la roue avant glissement de celle-ci, on mémorise le couple de référence et on calcule le signal de correction à partir du couple de référence mémorisé, dans lequel on extrait d'une cartographie une valeur de pente du signal de correction du couple de freinage en fonction du glissement sous le contrôle d'un signal d'activation d'optimisation calculé en fonction du couple de référence.

5. Procédé de contrôle selon la revendication 4, dans lequel le signal d'activation d'optimisation est calculé sous le contrôle d'un signal d'activation du contrôle de motricité.

## Patentansprüche

1. Traktionssteuersystem für ein Kraftfahrzeug, welches umfasst:
- Mittel zum Bestimmen des Schlupfes wenigstens eines der Räder des Fahrzeugs in Bezug auf den Boden,
- Berechnungsmittel (26), die geeignet sind, ein Rampensignal zur Korrektur eines auf wenigstens eines der Räder des Fahrzeugs zu übertragenden Drehmoments auszugeben, und
- Mittel zum Korrigieren des auf das Rad zu übertragenden Drehmoments in Abhängigkeit von dem Korrektursignal,
**dadurch gekennzeichnet, dass** die Mittel zum Bestimmen des Schlupfes ein Messmittel zum Messen des Referenzdrehmoments umfassen, das auf das Rad vor dem Schlupf desselben übertragen wurde, dadurch, dass die Berechnungsmittel ein Mittel zum Speichern des Referenzdrehmoments und zum Berechnen des Korrektursignals aus dem gespeicherten Referenzdrehmoment umfassen, und dadurch, dass die Berechnungsmittel ein Modul (15) umfassen, das geeignet ist, ein Optimierungsaktivierungssignal in Abhängigkeit von dem Referenzdrehmoment und einem Kennfeld (29), das einen Rampenanstiegswert zur Korrektur des Bremsmoments in Abhängigkeit vom Schlupf liefert, zu berechnen.

2. Traktionssteuersystem nach Anspruch 1, **dadurch gekennzeichnet, dass** das Referenzdrehmoment vor dem Auftreten oder der Erhöhung des Schlupfes gemessen wird.

3. Traktionssteuersystem nach Anspruch 1 oder 2, **dadurch gekennzeichnet, dass** das Optimierungsaktivierungssignal in Abhängigkeit von einer vorbestimmten Drehmomentspanne berechnet wird.

4. Verfahren zur Traktionssteuerung für ein Kraftfahrzeug, wobei der Schlupf wenigstens eines der Räder des Fahrzeugs gemessen wird, ein Rampensignal zur Korrektur eines auf wenigstens eines der Räder des Fahrzeugs zu übertragenden Drehmoments ausgegeben wird und das auf das Rad zu übertragende Drehmoment in Abhängigkeit von dem Korrektursignal korrigiert wird, **dadurch gekennzeichnet, dass** das Referenzdrehmoment gemessen wird, das auf das Rad vor dem Schlupf desselben übertragen wurde, das Referenzdrehmoment gespeichert wird und das Korrektursignal aus dem gespeicherten Referenzdrehmoment berechnet wird, wobei aus einem Kennfeld ein Anstiegswert des Korrektursignals des Bremsmoments in Abhängigkeit vom Schlupf unter der Steuerung eines in Abhängigkeit vom Referenzdrehmoment berechneten Optimierungsaktivierungssignals entnommen wird.

5. Verfahren zur Steuerung nach Anspruch 4, wobei das Optimierungsaktivierungssignal unter der Steuerung eines Aktivierungssignals der Traktionssteuerung berechnet wird.

## Claims

1. Drivability control system for a motor vehicle, comprising:
- means for determining the wheel spin of at least one of the wheels of the vehicle relative to the ground,
- computation means (26) capable of emitting a ramp-form signal for correcting a torque to be transmitted to at least one of the wheels of the vehicle, and
- means for correcting the torque to be transmitted to said wheel as a function of said correction signal,
**characterized in that** the means for determining the wheel spin comprise a measurement means for measuring the reference torque transmitted to the wheel before the wheel spin thereof, **in that** the computation means comprise a means for memorizing the reference torque and for calculating the correction signal from the memorized reference torque, and **in that** the computation means comprise a module (15) capable of calculating an optimization activation signal based on the reference torque and a mapping (29) delivering a ramp wheel spin value for correcting the braking torque as a function of the wheel spin.

2. Drivability control system according to Claim 1, **characterized in that** the reference torque is measured before the appearance or the increasing of the wheel spin.

3. Drivability control system according to Claim 1 or 2, **characterized in that** the optimization activation signal is calculated as a function of a predetermined torque margin.

4. Drivability control method for a motor vehicle, in which the wheel spin of at least one of the wheels of the vehicle is measured, a ramp-form signal for correcting a torque to be transmitted to at least one of the wheels of the vehicle is emitted and the torque to be transmitted to said wheel is corrected as a function of said correction signal, **characterized in that** the reference torque transmitted to the wheel before the wheel spin thereof is measured, the reference torque is memorized and the correction signal is calculated from the memorized reference torque, wherein a slope value of the signal for correcting the braking torque as a function of the wheel spin under the control of an optimization activation signal calculated as a function of the reference torque is extracted from a mapping.

5. Control method according to Claim 4, wherein the optimization activation signal is calculated under the control of a drivability control activation signal.
